Europäisches Patentamt

(19) European Patent Office

Office européen des brevets

(11) **EP 0 734 850 A1**

(12) **EUROPEAN PATENT APPLICATION**
published in accordance with Art. 158(3) EPC

(43) Date of publication:
02.10.1996 Bulletin 1996/40

(51) Int. Cl.$^6$: **B32B 15/08**, B05D 7/14

(21) Application number: 95934278.3

(86) International application number:
PCT/JP95/02082

(22) Date of filing: 12.10.1995

(87) International publication number:
WO 96/11801 (25.04.1996 Gazette 1996/18)

(84) Designated Contracting States:
DE DK IT

(30) Priority: 12.10.1994 JP 246304/94
12.10.1994 JP 246305/94
10.11.1994 JP 276829/94

(71) Applicants:
• CHUGOKU MARINE PAINTS, LTD.
Hiroshima-shi, Hiroshima-ken 730 (JP)
• MITSUBISHI JUKOGYO KABUSHIKI KAISHA
Tokyo 100 (JP)

(72) Inventors:
• HARADA, Osamu,
Chugoku Marine Paints, Ltd.
Hiroshima 739-06 (JP)
• OTA, Yojiro,
Chugoku Marine Paints, Ltd.
Hiroshima 739-06 (JP)
• TANABE, Shinichi,
Chugoku Marine Paints, Ltd.
Hiroshima 739-06 (JP)

• WATANABE, Masayasu,
Chugoku Marine Paints, Ltd.
Hiroshima 739-06 (JP)
• TAKAHASHI, Hideki,
Chugoku Marine Paints, Ltd.
Hiroshima 739-06 (JP)
• SHIBATA, Akio,
Mitsubishi Jukogyo KK
Nagasaki-shi, Nagasaki 850 (JP)
• TANIGUTI, T.,
Nagasaki Shipyard & Machinery Works
Nagasaki-shi, Nagasaki 850 (JP)
• TOMOSHIGE, K.,
Nagasaki Shipyard & Machinery Works
Nagasaki-shi, Nagasaki 850 (JP)
• MATUDA, K.,
Nagasaki Shipyard & Machinery Works
Nagasaki-shi, Nagasaki 850 (JP)

(74) Representative: Hansen, Bernd, Dr. Dipl.-Chem.
et al
Hoffmann, Eitle & Partner,
Patentanwälte,
Arabellastrasse 4
81925 München (DE)

(54) **STEEL SHEET FOR LARGE STRUCTURES, HAVING PRIMARY RUST-PROOFING PAINT FILM FORMED THEREON, APPLICATION METHOD OF PRIMARY RUST-PROOFING PAINT ON STEEL SHEET FOR LARGE STRUCTURE, AND COATED STEEL SHEET FOR LARGE STRUCTURE**

(57) A steel plate for large-size structures of the present invention has, formed at its surface, a coating film of a primary rust-preventive coating material comprising a silicate binder and powdery zinc as a rust-preventive pigment, the coating film has an average thickness of 3 to 10 μm in its dry state and exhibits an index of dispersion of coating film thicknesses of not greater than 0.18. A method of applying a primary rust-preventive coating material according to the present invention enables forming a uniform thin coating film which permits fillet welding at a speed as high as over 100 cm/min on a surface of a steel plate for large-size structures by virtue of maximum exertion of the excel-

lent rust-preventive property of the inorganic zinc-based primary rust-preventive coating material.

The coated steel plate for large-size structures of the present invention comprises the above uniform thin coating film of a primary rust-preventive coating material and a coating film of a powder coating material formed on a surface thereof in this order. This coated steel plate enables overcoming the prior art problems, i.e., pinholing at the surface of the powder coating film and bubbling in the interior of the powder coating film at the time of baking of the powder coating film and further cohesive failure in the interior of the layer of inorganic zinc-based primary rust-preventive coating film at the time of curing the powder coating film by virtue of maxi-

mum exertion of the excellent anticorrosion property of the inorganic zinc-based primary rust-preventive coating material. Thus, it ensures excellent anticorrosion property and productivity.

**Description**

TECHNICAL FIELD

The present invention relates to a steel plate for large-size structures provided with a coating film of primary rust-preventive coating material, a method of applying a primary rust-preventive coating material to a steel plate for large-size structures and a coated steel plate for large-size structures.

BACKGROUND ART

A method in which large-size structures, such as marine vessels and bridges, are built of steel previously subjected to rust removal and coated with a primary rust-preventive coating material, generally known as "shop primer method", is now widely employed. Organic primary rust-preventive coating materials, such as wash primers, epoxy zinc primers and epoxy nonzinc primers, and inorganic zinc-based primary rust-preventive coating materials in which use is made of a binder, such as a silicate binder, are known as being suitable for use as the primary rust-preventive coating material employed in the above shop primer method. Of these primary rust-preventive coating materials, the inorganic zinc-based primary rust-preventive coating materials are more widely used which are superior in weldability.

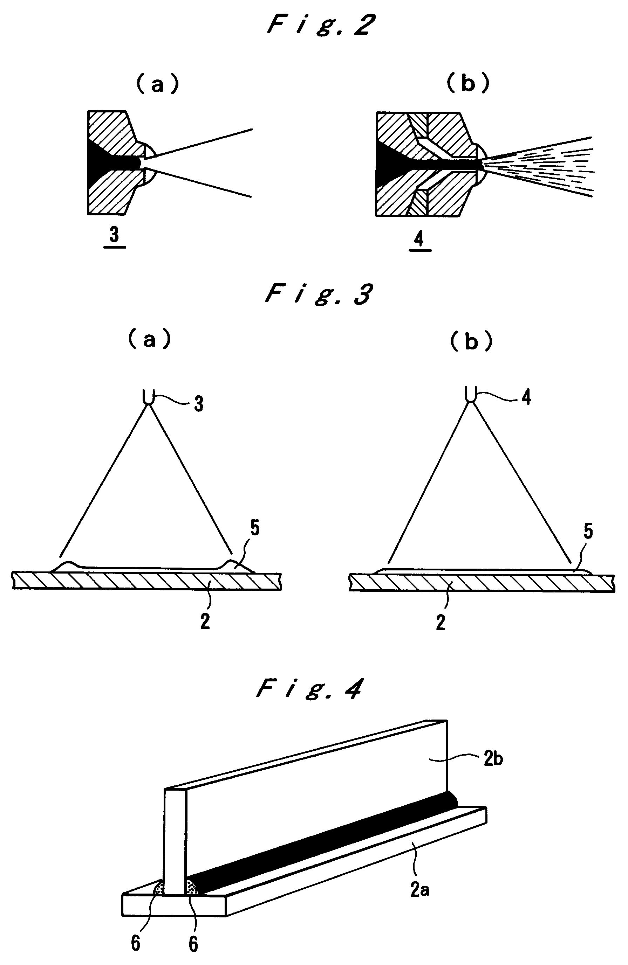

In this connection, a weld is an extremely important step affecting the strength and durability of each steel structure, and the effect of the primary rust-preventive coating material on the weld appears when a gas generated from a coating film of primary rust-preventive coating material at temperatures as high as over the melting point of iron, 1535°C, applied at the time of welding passes in the form of bubbles through the weld bead (molten pool). That is, the bubbles are likely to be confined in the weld bead to thereby cause blowholing or are likely to get out of the weld bead to thereby cause pitting. This phenomenon is manifest in a fillet welding as shown in Fig. 4. Fig. 4 is a perspective view of a steel plate for large-size structures having undergone a horizontal fillet welding. In the figure, designations 2a, 2b denote steel plates and designation 6 a weld bead.

The gas generated from the coating film of primary rust-preventive coating material includes gas (mainly, hydrogen gas) ascribed to cracking of organic materials, crystal water of a pigment and water adsorbed on the coating film and gas ascribed to evaporation of zinc. The greater the welding speed, the more sharply is the effect of the above gas on the weld intensified. Thus, it has been very difficult to increase the welding speed to 100 cm/min or higher.

The standard average thickness of the conventional coating film of inorganic zinc-based primary rust-preventive coating material formed on a surface of a steel plate is 15 μm in the dry state. Application of a coating film as thin as 10 to 12 μm has been attempted for improving the weldability. However, the dispersion of coating film thickness has been so extensive that the rust preventive effect is unsatisfactory and further the weldability improving effect has been unsatisfactory when the welding speed exceeds 70 cm/min. The reason for the extensive dispersion of coating film thickness resides in the coating method. The method of applying the primary rust-preventive coating material which has most generally been employed is as follows.

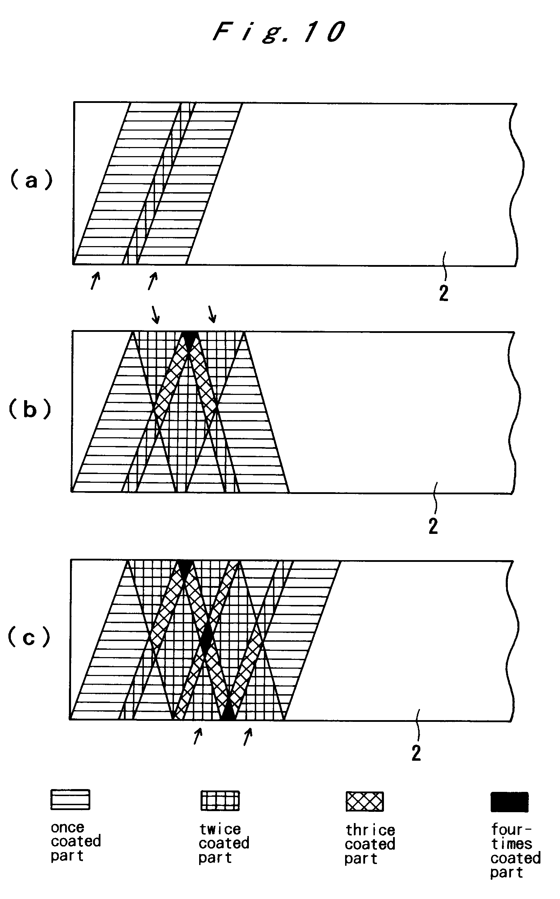

Illustratively, the coating method comprises executing coating application by means of two spray tips, which are arranged so as for their respective spray pattern ends to overlap each other in a width of about 10 cm, reciprocating on a steel plate traveling at a constant speed in a direction at right angles to the direction of travel of the steel plate. This coating method enables one-time wide coating with the use of two spray tips, so that the coating efficiency is high. However, it has the drawback that, despite setting of a twice performed coating, three or four times coated parts occur in high frequency depending on the X-pattern drawn by overlapping of the spray pattern ends. In this connection, reference is made to Fig. 10. Fig. 10 (a) shows the number of coating applications realized when a spray is conducted in a direction at right angles to the direction of travel of the steel plate. Fig. 10 (b) shows the number of coating applications realized after a further spray is conducted in a direction opposite to the spray coating direction of Fig. 10 (a). Fig. 10 (c) shows the number of coating applications realized after a further spray is conducted in a direction opposite to the spray coating direction of Fig. 10 (b), namely, in the same direction as the spray coating direction of Fig. 10 (a). Moreover, a too extensive reduction of overlapping of the spray pattern ends causes the drawback that, in the coating method in which the spray tips have high-speed reciprocating motion, the spray patterns fluctuate to thereby invite the danger of leaving coating unfinished or rendering the coating film extremely thin.

Therefore, there are demands for developments of a steel plate for large-size structures provided with a coating film of inorganic zinc-based primary rust-preventive coating material which is excellent in rust-prevention property as well as weldability and which enables welding at a speed as high as over 100 cm/min and further a method of applying the primary rust-preventive coating material to a steel plate for large-size structures.

In recent years, rationalization of coating operation on a steel plate for large-size structures such as marine vessels has drawn intense attention, and study is being made with respect to the increase of solid content of coating material, the increase drying speed of coating material and saving by means of the use of line coating or robot coating.

In line with the above rationalization of coating operation, a precoat method has been examined in which use is made of a powder coating material capable of forming a coating film which is excellent in properties, such as anticorrosion property and durability. As a result, it has been found that an abrupt improvement of the anticorrosion property of the steel plate is realized by applying an inorganic zinc-based primary rust-preventive coating material containing an inorganic binder such as a silicate binder and powdery zinc as a rust-preventive pigment to the steel plate for large-size structures and thereafter applying a powder coating material to the coated steel plate to thereby form a coating film of double layers consisting of the coating film of inorganic zinc-based primary rust-preventive coating material and the coating film of powder coating material, as compared with the direct application of a powder coating material to a surface of the steel plate for large-size structures.

However, the application of the inorganic zinc-based primary rust-preventive coating material at the customary standard dry coating film thickness of about 15 μm is accompanied by the problem (a) that pinholing occurs at the surface of the coating film of powder coating material or bubbling occurs in the interior of the coating film of powder coating material because the air or adsorbed water inside the voids of the coating film of inorganic zinc-based primary rust-preventive coating material is expanded at the time of baking of the coating film of powder coating material and also the problem (b) that the strength of the coating film of inorganic zinc-based primary rust-preventive coating material cannot follow the shrinking stress produced at the time of curing of the coating film of powder coating material, so that cohesive failure occurs within the layer of the coating film of inorganic zinc-based primary rust-preventive coating material with the result that the capabilities of the coating film of inorganic zinc-based primary rust-preventive coating material and the coating film of powder coating material cannot be fully exerted.

In the practical use of the coated steel plate for large-size structures provided with a coating film of double layers consisting of the coating film of inorganic zinc-based primary rust-preventive coating material and the coating film of powder coating material, the productivity must be enhanced by minimizing the time required for baking of the coating film of powder coating material. High frequency induction heating is the most advantageous among the means for heating a large-size steel plate to a temperature of about 200°C required for melting and curing of the powder coating material within a short time. The high frequency induction heating enables increasing the temperature to about 200°C within 60 sec.

However, rapid curing of the coating film of powder coating material causes the resolution of the above problems (a) and (b) to be more difficult because of the rapidity of the process of melting → leveling → reaction/curing.

The primary rust-preventive coating composition disclosed in Japanese Patent Laid-open Publication No. 6(1994)-210240 can be mentioned as the inorganic zinc-based primary rust-preventive coating material capable of resolving the above problems. This coating composition is a two package coating composition consisting of a solution containing a partial hydrolyzate of an alkyl silicate as a principal component and a dispersion obtained by dispersing a pigment composed mainly of powdery zinc in a solvent. The content of organic additives in the nonvolatile matter contained in the above dispersion is not greater than 0.4% by weight. This inorganic zinc-based primary rust-preventive coating material is excellent in the strength of the coating film and the rust prevention quality of the thin coating film.

However, the thin film coating with the inorganic zinc-based primary rust-preventive coating material described in Japanese Patent Laid-open Publication No. 6(1994)-210240 has been unsatisfactory in respect of the resolution of the above problems (a) and (b) because, in the conventional coating method, the thickness dispersion of the coating film of inorganic zinc-based primary rust-preventive coating material is large to thereby cause scratching with the result that the anticorrosion property is deteriorated or to produce thick film parts.

Therefore, the development of a coated steel plate for large-size structures is desired which comprises a steel plate for large-size structures having the coating film of inorganic zinc-based primary rust-preventive coating material and the coating film of powder coating material formed on a surface thereof in this order and which is excellent in anticorrosion property and productivity.

The present invention has been made with a view to solving the above problems of the prior art. Thus, an object of the present invention is to provide a steel plate for large-size structures provided with a uniform thin coating film of inorganic zinc-based primary rust-preventive coating material which is excellent in rust-prevention property as well as weldability and which enables welding at a speed of 100 cm/min or higher.

Another object of the present invention is to provide a method of applying a primary rust-preventive coating material to a steel plate for large-size structures, which method enables forming the above uniform thin coating film.

A further object of the present invention is to provide a coated steel plate for large-size structures which comprises a steel plate for large-size structures having the coating film of inorganic zinc-based primary rust-preventive coating material and the coating film of powder coating material formed on a surface thereof in this order and which is excellent in anticorrosion property and productivity.

DISCLOSURE OF THE INVENTION

The steel plate for large-size structures provided with a coating film of primary rust-preventive coating film according to the present invention is a steel plate for large-size structures having, formed at its surface, a coating film of a primary rust-preventive coating material comprising a silicate binder and powdery zinc as a rust-preventive pigment,

wherein the coating film has an average thickness of 3 to 10 $\mu$m in its dry state, and

wherein the coating film exhibits an index of dispersion of coating film thicknesses (= standard deviation /average of dry coating film thicknesses) which is not greater than 0.18.

The first method of applying a primary rust-preventive coating material to a steel plate for large-size structures according to the present invention comprises:

spray coating with a primary rust-preventive coating material a surface of the steel plate unidirectionally traveling at a constant speed, by means of a coating line having a plurality of fixed spray tips disposed with a spacing between adjacent spray tips in the direction of travel of the steel plate to be coated, said spray tips being arranged in positions such that their respective spray patterns at the moment of spraying never overlap each other, said adjacent spray tips being disposed in a predetermined distance in a direction perpendicular to the direction of travel of the steel plate and said distance being equal to 1/n of spray pattern width (n is an integer of 2 to 5), to thereby form a uniform thin coating film having an average thickness of 3 to 10 $\mu$m in its dry state and exhibiting an index of dispersion of coating film thicknesses (= standard deviation/average of dry coating film thicknesses) which is not greater than 0.18,

wherein said primary rust-preventive coating material comprises a silicate binder and powdery zinc as a rust-preventive pigment at a pigment volume content of 5 to 15%, said pigment in its entirety having an average particle size which is smaller than the average of dry coating film thicknesses.

The second method of applying a primary rust-preventive coating material to a steel plate for large-size structures according to the present invention is a method of applying a primary rust-preventive coating material to a steel plate for large-size structures which comprises:

coating with the primary rust-preventive coating material the steel plate by means of a coating line provided with a plurality of fixed spray tips to thereby form a uniform thin coating film having an average thickness of 3 to 10 $\mu$m in its dry state and exhibiting an index of dispersion of coating film thicknesses (= standard deviation /average of dry coating film thicknesses) which is not greater than 0.18. , said fixed spray tips being arranged in positions such that their respective spray patterns never overlap each other at the moment of spraying and arranged so that every coating-overlap width by the adjacent spray tips is identical and equal to (n - 1)/n of a width of coating made by a single spray tip (n is an integer of 2 to 5).

The third method of applying a primary rust-preventive coating material to a steel plate for large-size structures according to the present invention is unidirectional coating comprising:

spray coating with the primary rust-preventive coating material a surface of the steel plate unidirectionally traveling at a constant speed by means of a coating line having a plurality of spray tips which are disposed with a spacing between adjacent spray tips in a direction perpendiclar to the direction of travel of the steel plate to be coated and which move in a single direction crossing the direction of travel of the steel plate synchronously with a traveling speed of the steel plate, said spray tips being arranged in positions such that their respective spray patterns at the moment of spraying never overlap each other, said adjacent spray tips being disposed in a predetermined distance in the direction of travel of the steel plate and said distance being equal to 1/n of spray pattern width (n is an integer of 2 to 5),

then causing the plurality of spray tips to move in a direction opposite to said single direction without spray coating synchronously with the traveling speed of the steel plate, and

repeating said spray coating and said move of the spray tips in the opposite direction to form a uniform thin coating film having an average thickness of 3 to 10 $\mu$m in its dry state and exhibiting an index of dispersion of coating film thicknesses (= standard deviation /average of dry coating film thicknesses) which is not greater than 0.18..

The fourth method of applying a primary rust-preventive coating material to a steel plate for large-size structures according to the present invention is reciprocating coating comprising:

spray coating with a primary rust-preventive coating material a surface of the steel plate unidirectionally traveling at a constant speed by means of a coating line having a plurality of spray tips which are disposed with a spacing between adjacent spray tips in a direction perpendicular to the direction of travel of the steel plate to be coated and which move in a single direction perpendicular to the direction of travel of the steel plate synchronously with a traveling speed of the steel plate, said spray tips being arranged in positions such that their respective spray patterns at the moment of spraying never overlap each other, said adjacent spray tips being disposed in a predetermined distance in the direction of travel of the steel plate and said distance being equal to 1/n of spray pattern width (n is an integer of 2 or 3),

then spray coating with the primary rust-preventive coating material the surface of the steel plate by means of the plurality of spray tips being caused to move in a direction opposite to said single direction synchronously with the traveling speed of the steel plate, and

repeating said spray coatings to form a uniform thin coating film having an average thickness of 3 to 10 $\mu$m in its dry state and exhibiting an index of dispersion of coating film thicknesses (= standard deviation /average of dry coating film thicknesses) which is not greater than 0.18.

In the present invention, it is preferred that the spray tips be FF tips having a double tip structure capable of promoting atomization of the coating material.

The above coating methods enable forming on a surface of a steel plate for large-size structures a coating film having an average thickness of 3 to 10 $\mu$m in its dry state and exhibiting an index of dispersion of coating film thicknesses (= standard deviation /average of dry coating film thicknesses) which is not greater than 0.18.

The coated steel plate for large-size structures according to the present invention comprises a uniform thin coating film of a primary rust-preventive coating material and a coating film of a powder coating material formed on a surface thereof in this order,

the above primary rust-preventive coating material comprising a silicate binder and powdery zinc as a rust preventive pigment,

the above uniform thin coating film having an average thickness of 3 to 10 $\mu$m in its dry state and exhibiting an index of dispersion of coating film thicknesses (= standard deviation /average of dry coating film thicknesses) which is not greater than 0.18.

In the present invention, it is preferred that the uniform thin coating film be one formed by uniformly overlapped coating a surface of a steel plate for large-size structures with a primary rust-preventive coating material at least twice by means of a plurality of spray tips, the above primary rust-preventive coating material comprises a silicate binder and powdery zinc as a rust-preventive pigment at a pigment volume content of 5 to 15%, and the above pigment in its entirety has an average particle size smaller than an average of dry coating film thicknesses.

BRIEF DESCRIPTION OF THE DRAWING

Fig. 1 (a) and (b) are explanatory views each showing a mode of coating film forming process effected in the method of applying a primary rust-preventive coating material to a steel plate for large-size structures according to the present invention.

Fig. 2 is a sectional view showing structures of spray tips, in which numeral 3 denotes a standard tip and numeral 4 a conventional FF tip.

Fig. 3 (a) is an explanatory view showing the profile of thickness of coating film formed by spray coating with the use of the standard tip; and Fig. 3 (b) is an explanatory view showing the profile of thickness of coating film formed by spray coating with the use of the FF tip.

Fig. 4 is a perspective view of a steel plate for large-size structures having just undergone a horizontal fillet welding.

Fig. 5 shows forms of arrangement of spray tips and arrangement of their respective spray patterns employed in the present invention.

Fig. 6 shows other forms of arrangement of spray tips and arrangement of their respective spray patterns employed in the present invention.

Fig. 7 shows further forms of arrangement of spray tips and arrangement of their respective spray patterns employed in the present invention.

Fig. 8 is an explanatory view showing a mode of coating film forming process effected in the method of applying a primary rust-preventive coating material to a steel plate for large-size structures according to the present invention (unidirectional coating application).

Fig. 9 is an explanatory view showing a mode of coating film forming process effected in the method of applying a primary rust-preventive coating material to a steel plate for large-size structures according to the present invention (reciprocating coating application).

Fig. 10 is an explanatory view showing a coating film forming process achieved in the conventional method of effecting reciprocating spray coating with a primary rust-preventive coating material.

BEST MODE FOR CARRYING OUT THE INVENTION

A steel plate for large-size structures provided with a coating film of primary rust-preventive coating material, a method of applying a primary rust-preventive coating material to a steel plate for large-size structures and a coated steel plate for large-size structures according to the present invention will be illustrated below.

[Steel plate for large-size structures provided with a coating film of primary rust-preventive coating material]

First, the steel plate for large-size structures provided with a coating film of primary rust-preventive coating material according to the present invention will be described.

The coating film formed on a surface of a steel plate for large-size structures according to the present invention is a coating film of an inorganic zinc-based primary rust-preventive coating material comprising a silicate binder and powdery zinc as essential components.

The coating film formed on a surface of a steel plate for large-size structures according to the present invention is a thin coating film having an average thickness of 3 to 10 $\mu$m, preferably, 5 to 8 $\mu$m in its dry state and also is a uniform coating film exhibiting an index of dispersion of coating film thicknesses (= standard deviation/average of dry coating film thicknesses) which is not greater than 0.18, preferably, not greater than 0.15 and, still preferably, not greater than 0.12. When the average thickness of the coating film in the dry state falls within the above range, not only can the rust-preventing effect of the inorganic zinc-based primary rust-preventive coating material be fully exerted through the period of building large-size structures but also the weldability of the steel plate can be improved and fillet welding can be performed at a speed as high as over 100 cm/min. Further, when the index of dispersion of coating film thicknesses is not greater than 0.18, the weldability of the steel plate can be improved without detriment to the excellent rust-prevention property of the inorganic zinc-based primary rust-preventive coating material.

[Method of applying a primary rust-preventive coating material]

The above steel plate for large-size structures provided with a coating film of primary rust-preventive coating material according to the present invention can be produced by the employment of the following method of applying a primary rust-preventive coating material.

For example, the desired steel plate for large-size structures can be produced by the method comprising:

spray coating with the primary rust-preventive coating material a surface of the steel plate for large-size structures unidirectionally traveling at a constant speed by means of a coating line having a plurality of fixed spray tips, adapted to produce substantially mutually identical spray pattern widths, disposed with a spacing between adjacent spray tips in the direction of travel of the steel plate for large-size structures to be coated, where the above spray tips are arranged in positions such that their respective spray patterns at the moment of spraying never overlap each other, and the above adjacent spray tips are disposed in a predetermined distance in a direction perpendicular to the direction of travel of the steel plate for large-size structures and the distance is equal to 1/n of spray pattern width (n is an integer of 2 to 5), to thereby form a uniform thin coating film.

For example, when the above n is 2, the coating is made with 1/2 of the coating pattern width being overlapped to thereby enable a twice conducted coating. When the n is 3, the coating is made with 2/3 of the coating pattern width being overlapped to thereby enable a thrice conducted coating. Further, when the n is 4, the coating is made with 3/4 of the coating pattern width being overlapped to thereby enable a four times conducted coating. Still further, when the n is 5, the coating is made with 4/5 of the coating pattern width being overlapped to thereby enable a five times conducted coating.

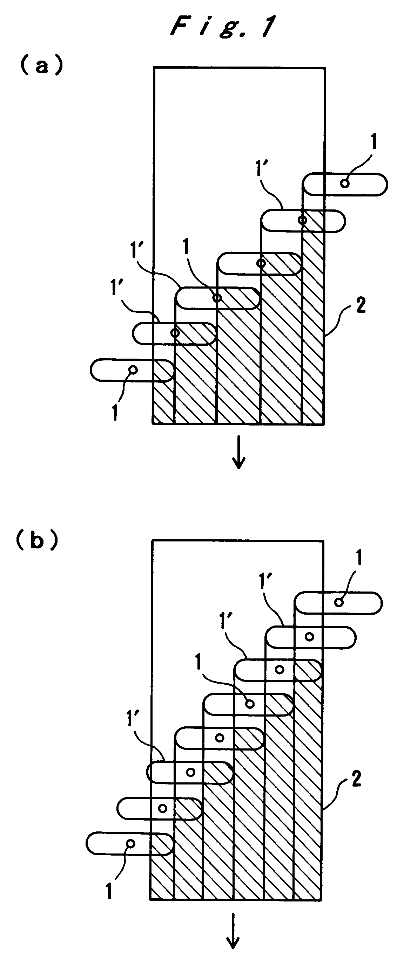

The above coating method will be described in the instance of n = 2 with reference to Fig. 1 (a). A surface of the steel plate for large-size structures 2 traveling at a constant speed in the direction arowed in the figure is spray coated with the primary rust-preventive coating material by means of a coating line having six fixed spray tips 1, adapted to produce mutually identical spray pattern widths, disposed with a spacing between adjacent spray tips in the direction of travel of the steel plate for large-size structures to be coated, where the above spray tips 1 are arranged in positions such that their respective spray patterns 1' at the moment of spraying never overlap each other and the above adjacent spray tips 1 are disposed in a predetermined distance in a direction perpendicular to the direction of travel of the steel plate for large-size structures and the distance is equal to 1/2 of spray pattern width, to thereby enable a twice conducted coating. In Fig. 1 (a), a hatching indicates a twice coated part. When the steel plate passes through the coating line, twice coating of the entire surface of the steel plate is accomplished.

The above coating method will be described in the instance of n = 3 with reference to Fig. 1 (b). A surface of the steel plate for large-size structures 2 traveling at a constant speed in the direction arowed in the figure is spray coated with the primary rust-preventive coating material by means of a coating line having eight fixed spray tips 1, adapted to produce mutually identical spray pattern widths, disposed with a spacing between adjacent spray tips in the direction of travel of the steel plate for large-size structures to be coated, where the above spray tips 1 are arranged in positions such that their respective spray patterns 1' at the moment of spraying never overlap each other and the above adjacent spray tips 1 are disposed in a predetermined distance in a direction perpendicular to the direction of travel of the steel plate for large-size structures and the distance is equal to 1/3 of spray pattern width, to thereby enable a thrice conducted coating. In Fig. 1 (b), a hatching indicates a thrice coated part. When the steel plate passes through the coating line, thrice coating of the entire surface of the steel plate is accomplished.

The primary rust-preventive coating material employed in the above method comprises a silicate binder and powdery zinc as a rust-preventive pigment. It is preferred that the pigment volume content of the coating material range from 5 to 15% and that the entire pigment have an average particle size smaller than an average of dry coating film thicknesses. With respect to the average particle size of the entire pigment, it is preferred that the ratio (d/t) of the average particle size of the entire pigment (d) to the average of dry coating film thicknesses (t) be less than 1/1, especially, less than 0.8/1. In the present invention, the conventional inorganic zinc-based primary rust-preventive coating material can be used as long as the pigment volume content and the average particle size of the entire pigment are regulated so as to fall within the above ranges. The use of this primary rust-preventive coating material enables obtaining a thin coating film, for example, a uniform coating film having a thickness of 10 $\mu$m or less in the dry state. The pigment volume content of the primary rust-preventive coating material is regulated in conformity with conditions set with respect to the number of coating applications and the thickness of coating film.

The above coating method has the advantage that the spray tips are fixed, so that the fluctuation of the spray patterns is slight with the result that, as long as the steel plate is traveled at a constant speed, the dispersion of thicknesses of the obtained coating film is slight.

In the present invention, coating overlap can be made to obtain two, three, four or five coatings in total piled one upon another by means of a plurality of spray tips arranged to be adapted to produce substantially mutually identical spray patterns with a predetermined distance between adjacent spray tips which is equal to 1/2, 1/3, 1/4 or 1/5 of spray pattern width, respectively. This plurality of overlapped coating applications enable forming a primary rust-preventive coating film of desired thickness on a surface of a steel plate for large-size structures. In this overlapped coating, the number of overlaps can be appropriately selected so as to form a coating film of desired thickness by appropriately regulating the spray tip orifice diameter (nozzle orifice diameter) through which the coating material is injected, the coating material injection pressure, the coating speed, the resin or solid contents of the coating material, etc.

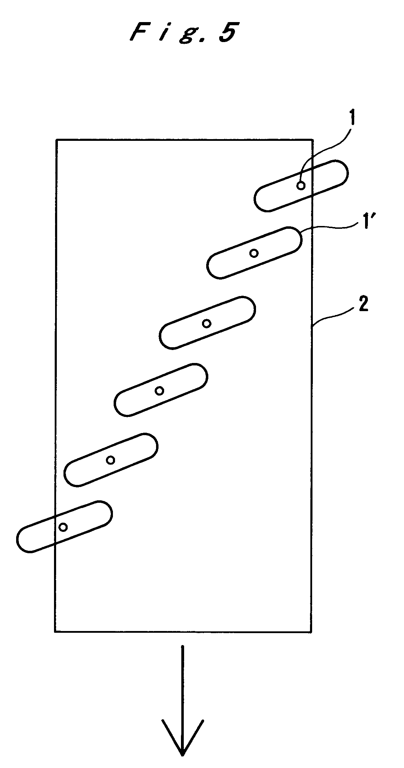

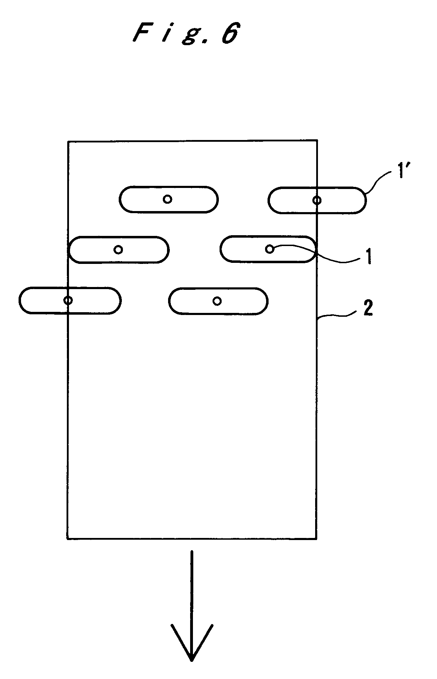

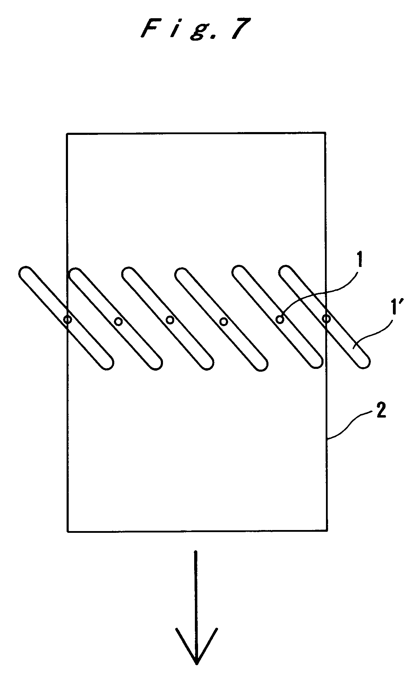

In the present invention, the spray tips 1 may be arranged in tandem in the direction of travel of the steel plate for large-size structures 2 so that their respective spray patterns 1' at the moment of spraying never overlap each other as shown in Fig. 1 (a) and (b). Alternatively, referring to Fig. 5, all the spray tips set on a single straight line may be arranged so that their respective spray patterns have a fixed angle from the direction of travel of the steel plate and are parallel to each other. Further, the spray tips 1 may be arranged as shown in Fig. 6 or may be arranged in a single line perpendicular to the direction of travel of the steel plate for large-size structures 2 so that their respective spray patterns 1' at the moment of spraying never overlap each other and so that their respective spray patterns have a fixed angle from the direction of travel of the steel plate as shown in Fig. 7. That is, the arrangement of spray tips is not particularly limited as long as, at any particular point of the steel plate for large-size structures, a plurality of spray patterns are not simultaneously formed by the conducting the spray tips and as long as the above coating overlap is provided. The spray tips may also be arranged in tandem perpendicularly to the direction of move of the steel plate for large-size structures (not shown). The arrow of each of Fig. 1 and Figs. 5 to 7 indicates the direction of move (travel), relative to the spray tips, of the steel plate for large-size structures 2.

In the above method of applying the primary rust-preventive coating material, the fixed spray tips are arranged in positions such that their respective spray patterns never overlap each other at the time of coating application and arranged so that every spray tip overlap coating width is identical which is equal to (n - 1)/n of a width of coating made by a single spray tip (n is an integer of 2 to 5).

In the present invention, the surface of the steel plate for large-size structures can be spray coated with the primary rust-preventive coating material, moving the spray tips in stead of traveling the steel plate for large-size structures. However, the coating method in which the steel plate is traveled with the spray tips fixed is preferred to the coating method in which the spray tips are moved with the steel plate fixed because of the attainment of less fluctuation of the spray patterns and greater coating speed.

In the present invention, the employment of FF tips (fine finish tips) 4 having a double tip structure capable of promoting atomization of the coating material as shown in Fig. 2 (b) is preferred to the use of the standard tips 3 as shown in Fig. 2 (a). The employment of the FF tips enables atomizing the spray mist of the primary rust-preventive coating material into finer particles to thereby improve the coating finish. Fig. 3 (a) shows the profile of thickness of the coating film 5 in the spray pattern formed on the surface of the steel plate 2 by spray coating with the use of the standard tip 3. On the other hand, Fig. 3 (b) shows the profile of thickness of the coating film 5 in the spray pattern formed on the surface of the steel plate 2 by spray coating with the use of the FF tip 4. It is apparent from comparison of Fig. 3 (a) with Fig. 3 (b) that the FF tip 4 is superior in atomization capability at the edge of the spray pattern to the standard tip 3, thereby enabling reducing the dispersion of thickness of the coating film 5. In the following coating method as well, it is preferred to employ the FF tips.

Further, the above steel plate for large-size structures provided with the uniform thin coating film of primary rust-preventive coating material can also be produced by the following coating method in which unidirectional coating application is carried out.

This unidirectional coating method comprises:

spray coating with the above primary rust-preventive coating material a surface of the steel plate for large-size structures unidirectionally traveling at a constant speed by means of a coating line having a plurality of spray tips, adapted to produce substantially mutually identical spray pattern widths, which is disposed with a spacing between adjacent spray tips in a direction perpendicular to the direction of travel of the steel plate for large-size structures to be coated and which move in a single direction crossing the direction of travel of the steel plate for large-size structures synchronously with a traveling speed of the steel plate for large-size structures, where the above spray tips are arranged in positions such that their respective spray patterns at the moment of spraying never overlap each other, and the above adjacent spray tips are disposed in a predetermined distance in the direction of travel of the steel plate for large-size structures and the distance is equal to 1/n of spray pattern width (n is an integer of 2 to 5, preferably, 2 to 4),

then causing the plurality of spray tips to move in a direction opposite to the above single direction synchronously with the traveling speed of the steel plate for large-size structures without spray coating, and

repeating the above spray coating and the above move of the spray tips in the opposite direction to form a uniform thin coating film having an average thickness of 3 to 10 $\mu$m in its dry state and exhibiting an index of dispersion of coating film thicknesses (= standard deviation/average of dry coating film thicknesses) which is not greater than 0.18.

For example, when the above n is 2, the coating is made with 1/2 of the coating pattern width being overlapped to thereby enable a twice conducted coating. When the n is 3, the coating is made with 2/3 of the coating pattern width being overlapped to thereby enable a thrice conducted coating. Further, when the n is 4, the coating is made with 3/4 of the coating pattern width being overlapped to thereby enable a four times conducted coating. Still further, when the n is 5, the coating is made with 4/5 of the coating pattern width being overlapped to thereby enable a five times conducted coating.

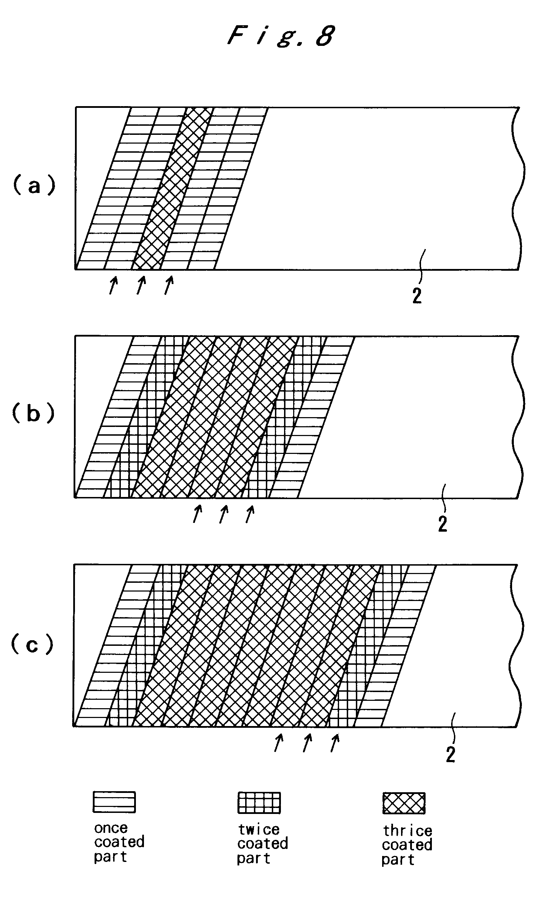

The above unidirectional coating method will be described in the instance of n = 3 with reference to Fig. 8. A first unidirectional spray coating of a surface of the steel plate for large-size structures unidirectionally traveling at a constant speed is performed with the primary rust-preventive coating material by means of a coating line having three spray tips, adapted to produce mutually identical spray pattern widths, which are disposed with a spacing between adjacent spray tips in a direction perpendicular to the direction of travel of the steel plate for large-size structures to be coated and which move in a single direction crossing the direction of travel of the steel plate for large-size structures synchronously with a traveling speed of the steel plate for large-size structures, where the above spray tips are arranged in positions such that their respective spray patterns at the moment of spraying never overlap each other, and the above adjacent spray tips are disposed in a predetermined distance in the direction of travel of the steel plate for large-size structures and the distance is equal to 1/3 of spray pattern width. As a result, once, twice, thrice, twice and once coated parts are formed in the sequence from the left end on the surface of the steel plate for large-size structures 2 as shown in Fig. 8 (a).

Then, the three spray tips are moved in a direction opposite to the above single direction synchronously with the traveling speed of the steel plate for large-size structures wihtout spray coating. Thereafter, a second spray coating of the surface of the steel plate for large-size structures is performed with the primary rust-preventive coating material by means of the three spray tips being caused to move in a direction opposite to the above direction (identical with the direction in which the spray tips were moved in the first spray coating) synchronously with the traveling speed of the steel plate for large-size structures. As a result, once, twice, thrice, thrice, thrice, thrice, twice and once coated parts are consecutively formed in the sequence from the left end on the surface of the steel plate for large-size structures 2 as shown in Fig. 8 (b). That is, thrice coated parts are formed in the sequence.

The execution of a third spray coating by following the above procedure results in formation of once, twice, thrice, thrice, thrice, thrice, thrice, thrice, thrice, twice and once coated parts in the sequence from the left end on the surface of the steel plate for large-size structures 2 as shown in Fig. 8 (c) to thereby increase the continuation of the thrice coated part.

The above repetition of coating process enables a thrice effected coating of a whole surface of a steel plate for large-size structures 2 with the primary rust-preventive coating material.

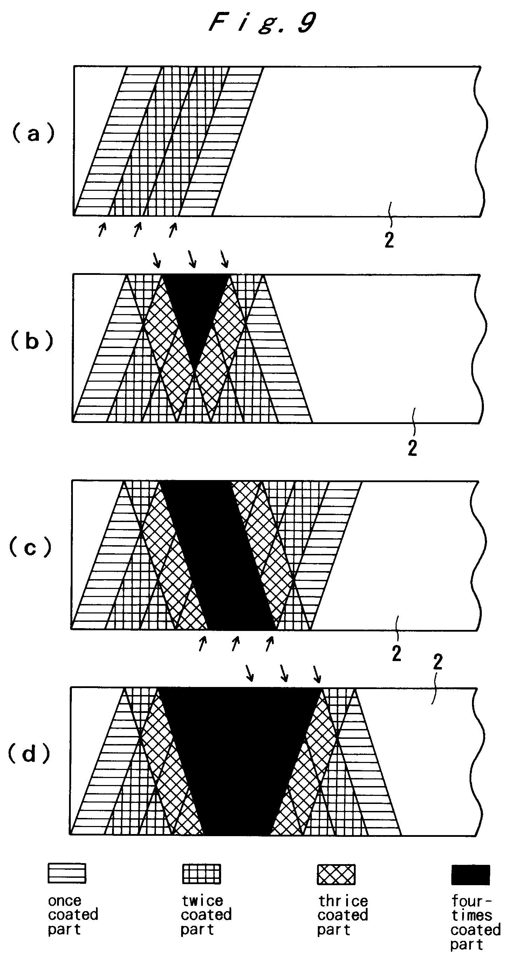

The execution of the above unidirectional coating by means of the spray tips being caused to move in the direction perpendicular to the direction of travel of the steel plate for large-size structures synchronously with the traveling speed of the steel plate for large-size structures leads to oblique coating of the steel plate as shown in Figs. 8 and 9. In contrast, the execution of the above unidirectional coating by means of the spray tips being caused to move in a direction obliquely crossing the direction of travel of the steel plate for large-size structures synchronously with the traveling speed of the steel plate for large-size structures enables not only oblique coating of the steel plate but also coating the steel plate in parallel to the direction of width of the steel plate by controlling the direction of move of the spray tips and the speed of the synchronous move. In the present invention, the unidirectional coating method in which the steel plate is coated in parallel to the direction of width of the steel plate is preferred from the viewpoint of reduction of coating material loss.

Still further, the above steel plate for large-size structures provided with the uniform thin coating film of primary rust-preventive coating material can also be produced by the following coating method in which reciprocating coating application is carried out.

This reciprocating coating method comprises:

spray coating with the above primary rust-reventive coating material a surface of the steel plate for large-size structures unidirectionally traveling at a constant speed by means of a coating line having a plurality of spray tips, adapted to produce substantially mutually identical spray pattern widths, which are disposed with a spacing between adjacent spray tips in a direction perpendicular to the direction of travel of the steel plate for large-size structures to be coated and which move in a single direction perpendicular to the direction of travel of the steel plate for large-size structures synchronously with a traveling speed of the steel plate for large-size structures, where the above spray tips are arranged in positions such that their respective spray patterns at the moment of spraying never overlap each other, and the above adjacent spray tips are disposed in a predetermined distance in the direction of travel of the steel plate for large-size structures and the distance is equal to 1/n of spray pattern width (n is 2 or 3), then spray coating with the primary rust-preventive coating material the surface of the steel plate for large-size structures by means of the plurality of spray tips being caused to move in a direction opposite to the above single direction synchronously with the traveling speed of the steel plate for large-size structures, and

repeating the above spray coatings to form a uniform thin coating film having an average thickness of 3 to 10 $\mu$m in its dry state and exhibiting an index of dispersion of coating film thicknesses (= standard deviation/average of dry coating film thicknesses) which is not greater than 0.18 .

The above reciprocating coating method will be described in the instance of n = 2 with reference to Fig. 9. A surface of the steel plate for large-size structures unidirectionally traveling at a constant speed is spray coated with the above primary rust-preventive coating material by means of a coating line having three spray tips, adapted to produce mutually identical spray pattern widths, which are disposed with a spacing between adjacent spray tips in a direction perpendicular to the direction of travel of the steel plate for large-size structures to be coated and which move in a single direction perpendicular to the direction of travel of the steel plate for large-size structures synthronously with a traveling speed of the steel plate for large-size structures, where the above spray tips are arranged in positions such that their respective spray patterns at the moment of spraying never overlap each other, and the above adjacent spray tips are disposed in a predetermined distance in the direction of travel of the steel plate for large-size structures and the distance is equal to 1/2 of spray pattern width. As a result, once, twice, twice and once coated parts are formed in the sequence from the left end on the surface of the steel plate for large-size structures 2 as shown in Fig. 9 (a).

Then, the surface of the steel plate for large-size structures is spray coated with the primary rust-preventive coating material by means of the three spray tips being caused to move in a direction opposite to the above single direction synchronously with the traveling speed of the steel plate for large-size structures. As a result, parts coated with the primary rust-preventive coating material once, twice, thrice and four times are formed in the sequence from the left end on the surface of the steel plate for large-size structures 2 as shown in Fig. 9 (b).

The repetition of the above reciprocating coating enables continuous formation of four times coated parts on the surface of the steel plate for large-size structures 2 as shown in Fig. 9 (c) and (d).

The repetition of the above coating process enables a four times effected coating of a whole surface of the steel plate for large-size structures 2 with the primary rust-preventive coating material.

In the above coating process, the employment of n = 3, which means that the above adjacent spray tips are disposed in a predetermined distance in the direction of travel of the steel plate for large-size structures and the distance is equal to 1/3 of spray pattern width, enables a six times effected coating of a whole surface of the steel plate for large-size structures 2 with the primary rust-preventive coating material.

The above steel plate for large-size structures provided with the uniform thin coating film of inorganic zinc-based primary rust-preventive coating material can be obtained by the above reciprocating spray coating process.

[Coated steel plate for large-size structures]

The coated steel plate for large-size structures according to the present invention will be described below.

The coated steel plate for large-size structures according to the present invention comprises a steel plate for large-size structures having a uniform thin coating film of primary rust-preventive coating material and a coating film of powder coating material formed on a surface thereof in this order.

The primary rust-preventive coating material for use in the present invention is an inorganic zinc-based primary rust-preventive coating material whose essential components comprises a silicate binder and powdery zinc as a rust-preventive pigment. Use can be made of the conventional inorganic zinc-based primary rust-preventive coating material. In the present invention, preferred use is made of the inorganic zinc-based primary rust-preventive coating composition disclosed in Japanese Patent Laid-open Publication No. 6(1994)-210240, namely, the inorganic zinc-based primary rust-preventive coating material which is a two package coating composition consisting of a solution containing a partial hydrolyzate of an alkyl silicate as a principal component and a dispersion obtained by dispersing a pigment composed mainly of powdery zinc in a solvent, and which the content of organic additives in the nonvolatile matter contained in the above dispersion is not greater than 0.4% by weight.

The coating film formed on the surface of the steel plate for large-size structures is a thin coating film having an average thickness of 3 to 10 $\mu$m, preferably, 4 to 8 $\mu$m and, still preferably, 5 to 7 $\mu$m in its dry state and is a uniform coating film exhibiting an index of dispersion of coating film thicknesses (= standard deviation/average of dry coating film thicknesses) which is not greater than 0.18, preferably, not greater than 0.15 and, still preferably, not greater than 0.12. When the average thickness of the coating film in the dry state and the index of dispersion of coating film thicknesses fall within the above ranges, not only can the anticorrosion property of the inorganic zinc-based primary rust-preventive coating material be exerted to the maximum extent but also the heretofore encountered problems, such as pinholing at the surface of the coating film of powder coating material, bubbling in the interior of the coating film of powder coating material at the time of baking of the coating film of powder coating material and cohesive failure within the layer of the coating film of inorganic zinc-based primary rust-preventive coating material at the time of curing of the coating film of powder coating material or thereafter, can be avoided.

The formation of the above uniform thin coating film of primary rust-preventive coating material can be effected by the above methods of applying the primary rust-preventive coating material.

Examples of the coating films of powder coating materials each provided on the above uniform thin coating film of primary rust-preventive coating material include those of conventional powder coating materials, such as epoxy resin, polyester resin and acrylic resin powder coating materials. Of these powder coating materials, the epoxy resin powder coating material is preferred. The above powder coating materials are nonpollutants in the sense that they do not contain any solvent and their anticorrosion properties are excellent. Moreover, the powder coating materials can be partially removed at the time of coating application, so that they are advantageous in that marking of, for example, fused points can be easily conducted.

Each of the above powder coating materials can preferably be applied by the conventional electrostatic spraying method. The thickness of the coating film of the powder coating material generally ranges from 50 to 200 $\mu$m and preferably from 100 to 150 $\mu$m.

The curing of the powder coating material is conducted by, for example, the conventional high frequency induction heating, hot air or infrared rays. Of these, the curing by the high frequency induction heating is especially preferred. In the curing by the high frequency induction heating, the temperature increase to about 200°C can be accomplished within 60 sec and accordingly a large-size steel plate can be heated in a short time to about 200°C required for the melting and curing of the powder coating material. Therefore, the coated steel plate for large-size structures having double layers of the coating film of inorganic zinc-based primary rust-preventive coating material and the coating film of powder coating material can efficiently be produced.

## EFFECT OF THE INVENTION

The steel plate for large-size structures provided with a coating film of primary rust-preventive coating material according to the present invention is a steel plate for large-size structures having, formed at its surface, a coating film of a primary rust-preventive coating material comprising a silicate binder and powdery zinc as a rust-preventive pigment, wherein the coating film has an average thickness of 3 to 10 $\mu$m in its dry state, and wherein the coating film exhibits an index of dispersion of coating film thicknesses of not greater than 0.18. Therefore, it ensures the maximum exertion of the rust-prevention property of the inorganic zinc-based primary rust-preventive coating material. Thus, the weldability of the steel plate can be improved by the application of a thin coating film, enabling fillet welding at a speed as high as over 100 cm/min.

The steel plate for large-size structures provided with the uniform thin coating film having the above effects can be obtained by the method of applying a primary rust-preventive coating material to a steel plate for large-size structures according to the present invention.

The coated steel plate for large-size structures according to the present invention comprises a steel plate for large-size structures and, formed on a surface thereof, a uniform thin coating film of a primary rust-preventive coating material and a coating film of a powder coating material in this order, wherein the above primary rust-preventive coating material comprises a silicate binder and powdery zinc as a rust-preventive pigment, the above uniform thin coating film has an average thickness of 3 to 10 $\mu$m in its dry state and exhibits an index of dispersion of coating film thicknesses of not greater than 0.18. Therefore, not only can the anticorrosion property of the inorganic zinc-based primary rust-preventive coating material be exerted to the maximum extent but also the heretofore encountered problems, such as pinholing at the surface of the coating film of powder coating material, bubbling in the interior of the coating film of powder coating material at the time of baking of the coating film of powder coating material and cohesive failure within the layer of the coating film of inorganic zinc-based primary rust-preventive coating material at the time of curing of the coating film of powder coating material, can be avoided. Thus, it ensures excellent anticorrosion property and productivity.

Therefore, the coated steel plate for large-size structures according to the present invention is suitable for use in marine vessels, bridges, plants, etc.

EXAMPLE

Hereinbelow, the present invention will be illustrated with reference to the following Examples, which in no way limit the scope of the invention.

Comparative Examples 1 to 3 and Examples 1 to 4

[Preparation of coating material]

(a) Preparation of base agent

35 parts by weight of ethyl silicate 40 (produced by Colcoat Co., Ltd.) and 45 parts by weight of isopropyl alcohol (IPA) were charged into a reactor vessel. A mixture of 4.5 parts by weight of deionized water and 0.05 part by weight of 35% hydrochloric acid was dropped while stirring and held at 50 to 55°C for 3 hr. Thereafter, 15.45 parts by weight of isobutyl alcohol was added and allowed to cool to room temperature, thereby obtaining a base agent of 0.88 in specific gravity.

The thus obtained base agent was commonly employed in Examples 1 to 4 and Comparative Examples 1 to 3.

(b) Preparation of paste A

A mixture of 22 parts by weight of powdery silica (average particle size: 3.8 μm and specific gravity: 2.70), 2 parts by weight of red iron oxide (average particle size: 0.2 μm and specific gravity: 5.10, produced by Nippon Bengara Kogyo Co., Ltd.), 1 part by weight of organic bentonite (specific gravity: 1.62, produced by N. L. Chemical Co., Ltd.), 2 parts by weight of synthetic silica fume (specific gravity: 2.20, produced by Nippon Aerosil Co., Ltd.), 15 parts by weight of xylol (specific gravity: 0.87) and 15 parts by weight of isopropyl alcohol (specific gravity: 0.79) was agitated by means of a sand grind mill (hereinafter often referred to as "S.G. mill"), and 45 parts by weight of powdery zinc (average particle size: 4.5 μm and specific gravity: 7.0, produced by The Honjo Chemical Corporation) was added and kneaded under agitation by means of a high-speed disperser to thereby effect pigment dispersion. Thus, paste A was prepared. The pigment volume concentration of the paste A was found to be 32.7% by calculation from the respective specific gravities of the raw materials.

This paste A was commonly employed in Comparative Examples 1 to 3 and Examples 1 and 2.

(c) Preparation of paste B

A mixture of 5 parts by weight of zinc oxide (average particle size: 0.5 μm and specific gravity: 5.83 produced by Sakai Chemical Industry Co., Ltd.), 3 parts by weight of black iron oxide (average particle size: 0.5 μm and specific gravity: 5.20, produced by Toda Kogyo Corp.), 12 parts by weight of powdery silica (average particle size: 2.1 μm), 1 part by weight of organic bentonite (specific gravity: 1.62, produced by N. L. Chemical Co., Ltd.), 2 parts by weight of synthetic silica fume (specific gravity: 2.2, produced by Nippon Aerosil Co., Ltd.), 13.5 parts by weight of xylol (specific gravity: 0.87) and 13.5 parts by weight of isopropyl alcohol (specific gravity: 0.79) was agitated by means of a S.G. mill, and 50 parts by weight of powdery zinc of fine particles (average particle size: 2.2 μm and specific gravity: 7.0, produced by The Honjo Chemical Corporation) was added and kneaded under agitation by means of a high-speed disperser to thereby effect pigment dispersion. Thus, paste B was prepared. The pigment volume concentration of the paste B was found to be 30.9% by calculation from the respective specific gravities of the raw materials.

This paste B was commonly employed in Examples 3 and 4.

(d) Proportioning for coating material

The above base agent was mixed with each of the above pastes in a weight ratio of 40 : 60. Isopropyl alcohol was added to render the pigment volume concentration suitable for obtaining the desired thickness.

[With respect to coating, rust-prevention property and weldability tests]

(1) Coating test

Comparative Examples

In Comparative Examples 1 to 3, the coating was conducted in the above-mentioned conventional method in which a steel plate of 4.5 m in width and 6 m in length was horizontally moved at a constant speed and in which spray tips were caused to effect reciprocating motion in a direction of 90° from the direction of move of the steel plate.

The moving speed of the steel plate was interlocked with that of the spray tips in accordance with the following formula for uniforming the coating on the whole.

$$P = LV/v$$

(P: composite coating pattern width [m],

L: reciprocating move distance of spray tips [m] (steel plate width x 2 [m]),

V: moving speed of steel plate [m/min], and

v: moving speed of spray tips [m/min]).

The coating pressure was regulated by means of an airless pump of 45:1 in compression ratio so that each of the respective coating pattern widths of two spray tips was 0.45 m when the distance between the spray tips and the surface to be coated was 0.3 m, and the two spray tips were arranged so that their respective coating patterns overlapped each other in a width of 0.1 m. Consequently, the composite coating pattern width P of the above formula was 0.8 m.

In Comparative Examples 1 to 3, the pigment volume concentration of the coating material and the coating material delivery through the spray tips were regulated in conformity with the intended coating film thickness.

The coating conditions of Comparative Examples 1 to 3 are given in Table 2.

Examples

In Examples 1 to 3, the coating was carried out by passing a steel plate of 1.5 m in width and 3 m in length under the spray patterns formed by the coating material delivered through a plurality of spray tips arranged and fixed according to the method of the present invention.

In Example 4, the coating was carried out by moving the spray tips at a constant speed with the steel plate fixed.

In Examples 1 to 4, the coating pressure was regulated by means of an airless pump of 45:1 in compression ratio so that the spray pattern width was 0.6 m when the spray tips were positioned at a distance of 0.4 m from the surface to be coated.

In Examples 1, 2 and 4, six spray tips were employed so that the respective coating patterns of adjacent spray tips overlapped each other in a half width and so that the steel plate of 1.5 m in width was uniformly coated twice in total.

In Example 3, ten spray tips were employed so that the respective coating patterns of adjacent spray tips overlapped each other in a 2/3 width and so that the steel plate of 1.5 m in width was uniformly coated three times in total. Two airless pumps were employed for feeding the coating material to the spray tips. Assume that the ten spray tips were numbered 1, 2, 3, 4, 5, 6, 7, 8, 9 and 10 in the order of arrangement, let one of the two airless pumps feed the coating material to spray tips. 1, 3, 5, 7 and 9 and the other airless pump feed the coating material to spray tips 2, 4, 6, 8 and 10, so that the coating was uniformly conducted on the whole.

Paste A was employed in Examples 1 and 2 and paste B in Examples 3 and 4. The pigment volume concentration of the coating material and the coating material delivery through the spray tips were individually regulated in conformity with the intended coating film thickness.

The coating conditions of Examples 1 to 4 are given in Table 2.

With respect to the measurement of the coating film thickness performed in the above Comparative Examples and Examples, cold rolled soft steel sheet (1 m in length, 3 cm in width and 0.8 mm in thickness) was coated along the length in the center of the steel sheet and the coating film thickness was measured at 20 points or more with the use of thickness gauge (model LE-210 manufactured by KETT), thereby determining the average coating film thickness in the dry state, the standard deviation and the index of dispersion of coating film thicknesses.

The results are given in Table 2.

(2) Rust prevention property test

A sand blasted SS400 steel plate having a size of 100 mm x 300 mm x 3.2 mm was placed on the large-size steel plate (4.5 x 6 m) employed in the coating test and coated, and the coating film formed on the surface of the SS400 steel plate by means of the above coating was cured indoors for one week to thereby obtain a test piece.

The thus obtained test piece was secured at 45° to the south on a weathering table set in the coastal area of Otake City, Hiroshima Prefecture and weathered. The degree of rusting was evaluated in the following five grades (5 to 1) in relation to the period up to the rusting.

〈Evaluation〉

5: no rusting at all,

4: very minute proportion of point rusts observed,

3: point rusts observed all over the surface with the entire surface looking yellow,

2: at least 30% of the whole area rusted, and

1: at least 80% of the whole area rusted.

The results are given in Table 2.

(3) Weldability test

With the use of a pair of sand blasted SS400 steel plates each having a size of 800 mm x 100 mm x 12 mm, an inverted T-shaped assembly was built in which one of the pair was used as an upper board (corresponding to member 2b of Fig. 4) and the other steel plate as a lower board (corresponding to member 2a of Fig. 4), and a horizontal fillet welding was performed. The end face of the upper board brought into contact with the lower board was machined to obtain a smooth face so that no clearance occurred between the upper and lower boards.

The lower board and the two sides of the upper board were coated on the large-size steel plate employed in the coating test under the same conditions as in the coating test, and the end face of the upper board brought into contact with the lower board was coated under the same conditions as in the coating test except that the position of the spray tips was lifted 10 cm upward. The coating films formed on the upper and lower boards by the above coatings were cured indoors for one week. The resultant upper and lower boards were used as test pieces.

Welding was conducted according to the tandem method (welding speed: 1200 mm/min). A first bead was welded and allowed to cool, and a second bead was welded. Pitting ratio (number of pits/m) and blowholing ratio (total length of maximum widths of entire blowhole sections at broken-out section of welded part/weld length x 100%) were measured with respect to the second bead susceptible to weld defects.

The conditions of the welding according to the tandem method are specified in Table 1 and the results are given in Table 2.

Table 1

Welding Conditions (Tandem Method)

| | prior torch | subsequent torch |
|---|---|---|
| welding speed | 120 cm/min | |
| wire *1 | Ø 1.6 mm | Ø 1.4 mm |
| torch spacing | 25 mm | |
| torch angle | | |
|    angle from lower board | 45° | 50° |
|    angle from upper board | 10° inclined backward | 10° inclined forward |
| wire ejection length | 25 mm | 25 mm |
| wire target position | corner | 1.5 mm sideways from corner |
| current, voltage | 425A-32V | 360A-32V |
| shield gas | $CO_2$ | $CO_2$ |
|    feed speed (litter/min) | 30 | 30 |

* 1: DW-100 manufactured by Kobe Steel, Ltd.

* 2: The end face of the upper board was fixed in pressed relationship to the lower board by means of a wedge.

Table 2

| | Comp. Ex. 1 | Comp. Ex. 2 | Comp. Ex. 3 |
|---|---|---|---|
| <coating material> | | | |
| type of paste | A | A | A |
| pigment vol. conc. [%] | 13.0 | 10.6 | 7.7 |
| <tips> | | | |
| Graco K.K. tip No. (type) | 821 (standard) | 819 (standard) | 817 (standard) |
| no. of tips | 2 | 2 | 2 |
| pattern width per tip [m] | 0.45 | 0.45 | 0.45 |
| adjacent coating pattern overlap width [m] | 0.1 (prior art) | 0.1 (prior art) | 0.1 (prior art) |
| <coating condition> coating method | steel plate/tip interlocked, reciprocating coating (prior art) | | |
| moving speed of steel plate [m/min] | 6 | 6.4 | 6.4 |
| moving speed of tip [m/min] | 68 | 72 | 72 |
| <results of film thickness measurement> | | | |
| av. dry film thickness [μm] | 15.6 | 9.4 | 5.3 (scratch) |
| standard deviation | 3.28 | 2.16 | 1.21 |
| index of film thickness dispersion | 0.21 | 0.23 | 0.23 |
| <rust prevention> period of weathering | | | |
| 1 month | 5 | 5 | 2 |
| 2 month | 5 | 4 | 1 |
| 3 month | 5 | 3 | 1 |
| 4 month | 5 | 2 | 1 |
| 5 month | 5 | 1 | 1 |
| 6 month | 4 | 1 | 1 |
| <weldability> | | | |
| pitting ratio [no. of pits/m] | 11 | 5 | 1 |
| blowholing ratio [%] | 30 | 13 | 5 |

EP 0 734 850 A1

Table 2 (cont'd)

| | Example 1 | Example 2 | Example 3 | Example 4 |
|---|---|---|---|---|
| **<coating material>** | | | | |
| type of paste | A | A | B | B |
| pigment vol. conc. [%] | 13.0 | 10.6 | 12.0 | 12.0 |
| **<tips>** | | | | |
| Graco K.K. tip No. (type; FF or standard) | 819 (STND) | 815 (STND) | 816 (FF) | 816 (FF) |
| no. of tips | 6 | 10 | 6 | 6 |
| pattern width per tip [m] | 0.6 | 0.6 | 0.6 | 0.6 |
| adjacent coating pattern overlap width [m] | 0.3 (1/2 width) | 0.4 (2/3 width) | 0.3 (1/2 width) | 0.3 (1/2 width) |
| **<coating condition>** | | | | |
| coating method | coating with tips fixed and steel plate moved | | | coating with steel plate stationed and tips moved |
| moving speed of steel plate [m/min] | 55 | 50 | 60 | - |
| moving speed of tip [m/min] | - | - | - | 60 |
| **<results of film thickness measurement>** | | | | |
| av. dry film thickness [μm] | 9.7 | 7.8 | 5.4 | 5.2 |
| standard deviation | 1.36 | 0.70 | 0.65 | 0.73 |
| index of film thickness dispersion | 0.14 | 0.09 | 0.12 | 0.14 |
| **<rust prevention>** period of weathering | | | | |
| 1 month | 5 | 5 | 5 | 5 |
| 2 month | 5 | 5 | 5 | 5 |
| 3 month | 5 | 4 | 4 | 4 |
| 4 month | 4 | 2 | 3 | 2 |
| 5 month | 3 | 1 | 2 | 1 |
| 6 month | 1 | 1 | 1 | 1 |
| **<weldability>** | | | | |
| pitting ratio [no. of pits/m] | 3 | 0 | 0 | 0 |
| blowholing ratio [%] | 7 | 3 | 1< | 1< |

In Comparative Examples 1, 2 and 3 in which exemplary coating was conducted according to the above prior art method, the film thickness dispersion was extensive. In Comparative Example 3, a coating film having an average thickness of about 5 μm in the dry state was obtained but it had scratches.

Table 2 shows that the weathering rust-prevention property is markedly deteriorated in accordance with the decrease of the film thickness and that the average dry film thickness would have to be at least 10 $\mu$m for ensuring the practical weathering period of 3 months.

In Examples 1 and 2 in which the same coating material as in the Comparative Examples was employed, a remarkable decrease of the index of film thickness dispersion is recognized. Further, it is recognized that the rust-prevention properties are excellent in Examples 1 and 2 as compared with that of Comparative Example 2 in which the coating film of about the same thickness as in Examples 1 and 2 was obtained.

In Examples 3 and 4 in which coating films as thin as about 5 $\mu$m were formed with the use of the coating material containing the paste B prepared using the pigment whose average particle size was smaller than in the paste A, scratch as observed in Comparative Example 3 was absent and the rust-prevention properties ensuring the practical weathering period of 3 months were obtained.

The effect of the thin coating film on the improvement of the weldability was manifest in both the Examples and the Comparative Examples. However, comparison of coating films whose average thicknesses in the dry state were identical with each other showed that the occurrence of weld defects was less in the Examples.

Comparative Examples 4 to 6 and Examples 5 to 9

(a) Preparation of base agent

A base agent was prepared in the same manner as in the above Comparative Examples 1 to 3 and Examples 1 to 4 and was commonly employed in Examples 5 to 9 and Comparative Examples 4 to 6.

(b) Preparation of paste A

Paste A was prepared in the same manner as in the above Comparative Examples 1 to 3 and Examples 1 to 4 and was employed in Comparative Examples 4 to 6 and Examples 5 and 6.

(c) Preparation of paste B

Paste B was prepared in the same manner as in the above Comparative Examples 1 to 3 and Examples 1 to 4 and was employed in Examples 7 to 9.

(d) Proportioning for coating material

The above base agent was mixed with each of the above pastes in a weight ratio of 40 : 60. Isopropyl alcohol was added to render the pigment volume concentration suitable for obtaining the desired thickness.

[With respect to coating, rust-prevention property and weldability tests]

(1) Coating test

The coating was conducted by means of spray tips being caused to effect reciprocating motion in a direction of 90° from the direction of move of a steel plate of 4.5 m in width and 6 m in length.

The moving speeds of the steel plate and the spray tips were regulated in accordance with the following formula for uniforming the coating on the whole.

$$P = LV/v$$

(P: composite coating pattern width [m],
L: reciprocating move distance of spray tips [m] (steel plate width x 2 [m]),
V: moving speed of steel plate [m/min], and
v: moving speed of spray tips [m/min]).

In the conventional two-spray-tips method, the composite coating pattern width P is expressed by the formula:

$$P = 2\,P_o - p$$

wherein p represents the central pattern overlap width and $P_o$ represents the coating pattern width per spray tip.

In the present invention, the composite spray pattern width (P) is expressed by the following formulae, depending on the overlap width of respective coating patterns of adjacent spray tips and the number of spray tips employed (N), assuming that the composite coating pattern width (P) of the present invention, as different from the above composite coating pattern width (P) of the conventional two-spray tips method, means the coating width realized by spray coating with a plurality of spray tips minus the coating width of overlapped-coated part by the subsequent spray coating.

| Overlap width of respective patterns of adjacent tips | Composite spray pattern width |
|---|---|
| when $P_o/2$ | $P = NP_o/2$, |
| when $2 P_o/3$ | $P = NP_o/3$, and |
| when $3 P_o/4$ | $P = NP_o/4$. |

According to the coating method of the present invention, when the overlap width of respective coating patterns of adjacent spray tips is $P_o/2$, $2 P_o/3$ and $3 P_o/4$, the number of coating applications is two, three and four, respectively, in the one-way coating (unidirectional coating) and is four, six and eight, respectively, in the reciprocating coating.

Use was made of an airless pump of 45:1 in compression ratio and standard tips and FF tips (fine finish tips) of the 163-800 series manufactured by Graco K.K. as spray tips. A spacing of 0.3 m was provided between the spray tips and the steel plate, and primary air pressure was regulated so that the coating pattern width was 0.45 m.

Two airless pumps were employed in Example 7 in which use was made of six spray tips. Assume that the six spray tips were numbered 1, 2, 3, 4, 5 and 6 in the order of arrangement, let one of the two airless pumps feed the coating material to spray tips 1, 3 and 5 and the other airless pump feed the coating material to spray tips 2, 4 and 6, so that the coating was uniformly conducted on the whole without the coating localization by the individual airless pumps.

The coating conditions of Comparative Examples 4 to 6 and Examples 5 to 9 are given in Table 3.

With respect to the measurement of the coating film thickness performed in the above Comparative Examples and Examples, cold rolled soft steel sheet (1 m in length, 3 cm in width and 0.8 mm in thickness) was coated along the length in the center of the steel sheet and the coating film thickness was measured at 20 points or more with the use of thickness gauge (model LE-210), thereby determining the average coating film thickness in the dry state, the standard deviation and the index of dispersion of coating film thicknesses.

The results are given in Table 3.

(2) Rust-prevention property test

The rust-preventive property test was conducted in the same manner as in the above rust-prevention property test. The results are given in Table 3.

>(3) Weldability test

The weldability test was conducted in the same manner as in the above weldability test.

The results are given in Table 3.

Table 3

| | Comp. Ex. 4 | Comp. Ex. 5 | Comp. Ex. 6 |
|---|---|---|---|
| **<coating material>** | | | |
| type of paste | A | A | A |
| pigment vol. conc. [%] | 13.0 | 10.6 | 7.7 |
| **<tips>** | | | |
| Graco K.K. tip No. (type; FF or standard) | 821(standard) | 819(standard) | 817(standard) |
| N (no. of tips) | 2 | 2 | 2 |
| Po (pattern width per tip [m]) | 0.45 | 0.45 | 0.45 |
| adjacent coating pattern overlap width [m] | 0.1 | 0.1 | 0.1 |
| P (composite pattern width [m]) | (prior art) 0.80 | (prior art) 0.80 | (prior art) 0.80 |
| **<coating method>** | | | |
| coating (reciprocating or unidirectional) | reciprocating | reciprocating | reciprocating |
| no. of cating application | 2 | 2 | 2 |
| moving speed of steel plate [m/min] | 6.0 | 6.4 | 6.4 |
| moving speed of tip [m/min] | 68 | 72 | 72 |
| **<results of film thickness measurement>** | | | |
| av. dry film thickness [μm] | 15.6 | 19.4 | 5.3(scratch) |
| standard deviation | 3.28 | 2.16 | 1.21 |
| index of film thickness dispersion | 0.21 | 0.23 | 0.23 |
| **<rust prevention>** | | | |
| period of weathering | | | |
| 1 month | 5 | 5 | 2 |
| 2 month | 5 | 5 | 1 |
| 3 month | 5 | 3 | 1 |
| 4 month | 5 | 2 | 1 |
| 5 month | 5 | 1 | 1 |
| 6 month | 4 | 1 | 1 |
| **<weldability>** | | | |
| pitting ratio [no. of pits/m] | 11 | 5 | 0 |
| blowholing ratio [%] | 30 | 16 | 5 |

Table 3 (cont'd)

|  | Example 5 | Example 6 | Example 7 | Example 8 | Example 9 |
|---|---|---|---|---|---|
| <coating material> |  |  |  |  |  |
| type of paste | A | A | B | B | B |
| pigment vol. conc. [%] | 10.6 | 10.6 | 9.0 | 6.5 | 6.5 |
| <tips> |  |  |  |  |  |
| Graco K.K. tip No. (type; FF or standard) | 820 (FF) | 817(STND) | 818 (FF) | 815(STND) | 815(STND) |
| N (no. of tips) | 3 | 2 | 6 | 4 | 4 |
| $P_0$ (pattern width per tip [m]) | 0.45 | 0.45 | 0.45 | 0.45 | 0.45 |
| adjacent coating pattern overlap width [m] | 0.23 (1/2 width) | 0.23 (1/2 width) | 0.11 (3/4 width) | 0.23 (1/2 width) | 0.30 (2/3 width) |
| P (composite pattern width [m]) | 0.68 | 0.45 | 0.68 | 0.90 | 0.6 |
| <coating method> |  |  |  |  |  |
| coating (reciprocating or unidirectional) | unidirect. | reciprocat. | unidirect. | reciprocat. | reciprocat. |
| no. of cating application | 2 | 4 | 3 | 4 | 6 |
| moving speed of steel plate [m/min] | 4.9 | 5.0 | 7.1 | 7.9 | 6.0 |
| moving speed of tip [m/min] | 65 | 100 | 95 | 80 | 91 |
| <results of film thickness measurement> |  |  |  |  |  |
| av. dry film thickness [µm] | 9.9 | 9.1 | 8.9 | 5.4 | 6.9 |
| standard deviation | 1.49 | 1.18 | 1.07 | 0.59 | 0.62 |
| index of film thickness dispersion | 0.15 | 0.13 | 0.12 | 0.11 | 0.09 |
| <rust prevention> |  |  |  |  |  |
| period of weathering  1 month | 5 | 5 | 5 | 5 | 5 |
| 2 month | 5 | 5 | 5 | 5 | 5 |
| 3 month | 5 | 5 | 5 | 4 | 5 |
| 4 month | 4 | 3 | 5 | 2 | 4 |
| 5 month | 2 | 2 | 4 | 1 | 3 |
| 6 month | 1 | 1 | 2 | 1 | 1 |
| <weldability> |  |  |  |  |  |
| pitting ratio [no. of pits/m] | 3 | 2 | 1 | 0 | 0 |
| blowholing ratio [%] | 10 | 7 | 5 | 1< | 2 |

In Comparative Examples 4, 5 and 6 in which exemplary coating was conducted according to the above prior art method, the film thickness dispersion was extensive. In Comparative Example 6, a coating film having an average thickness of about 5 µm in the dry state was obtained but it had scratches.

Table 3 shows that the weathering rust-prevention property is markedly deteriorated in accordance with the decrease of the film thickness and that the average dry film thickness would have to be at least 10 μm for ensuring the practical weathering period of 3 months.

In Examples 5 and 6 in which the coating of the present invention was carried out with the use of the same coating material as in Comparative Example 5, a remarkable decrease of the index of film thickness dispersion is recognized. Further, it is recognized that the weathering rust-prevention properties are excellent in Examples 5 and 6 as compared with that of Comparative Example 5 in which the coating film of about the same average dry film thickness as in Examples 5 and 6 was obtained.

In Examples 7, 8 and 9 in which use was made of the paste B prepared using the pigment whose average particle size was smaller than in the paste A, the index of film thickness dispersion became very small in accordance with the increase of the number of overlaps. No scratch was observed in Example 8 in which the coating film had an average thickness of 5.4 μm in the dry state as well. The rust-prevention property of 3 months in practical weathering period was attained in Example 8 in which the coating film of 5.4 μm in average dry film thickness was obtained as well inasmuch as use was made of the coating material containing fine particles of zinc.

With respect to the weldability, the weld defects were conspicuously reduced in accordance with the decrease of the average dry film thickness in both the Examples and the Comparative Examples. However, comparison of coating films of the Examples and Comparative Examples whose average thicknesses in the dry state were identical with each other showed that the occurrence of weld defects was less in the Examples in which the coating films whose thickness dispersions were smaller were obtained.

⟨Examples and Comparative Examples relating to Coated Steel Plate for Large-size Structures⟩

[Preparation of primary rust-preventive coating material]

(a) Preparation of base agent

A base agent was prepared in the same manner as in the above Comparative Examples 1 to 3 and Examples 1 to 4 and was commonly employed in Examples 10 and 11 and Comparative Examples 7 to 9.

(b) Preparation of paste A

Paste A was prepared in the same manner as in the above Comparative Examples 1 to 3 and Examples 1 to 4 and was employed in Comparative Examples 8 and 9 and Example 10.

(c) Preparation of paste C

Paste C was prepared in accordance with the process for producing a primary rust-preventive coating composition disclosed in Japanese Patent Laid-open Publication No. 6(1994)-210240.

250 parts by weight of ethyl silicate 40 (produced by Colcoat Co., Ltd.), 70 parts by weight of water, 250 parts by weight of isopropyl alcohol and 0.1 part by weight of 35% hydrochloric acid were charged into a vessel. The mixture was held at 50 to 55°C for 3 hr while stirring and aged in an oven at 50°C for 14 hr. Thereafter, 430 parts by weight of isopropyl alcohol was added, thereby preparing a treatment liquid for coating powdery zinc.

Subsequently, 20 parts by weight of the thus prepared treatment liquid, 20 parts by weight of isobutyl alcohol and 40 parts by weight of toluol were charged into a vessel. 500 parts by weight of powdery zinc was added to the mixture while vigorously stirring to thereby obtain a dispersion. 80 parts by weight of a 1:1 mixture of toluol and xylol was dropped into the dispersion over a period of 30 min. 2 parts by weight of a 0.1% ethylamine xylol solution was added to thereby neutralize the hydrochloric acid. The stirring was further continued for 1 hr to thereby obtain a dispersion of coated powdery zinc.

Thereafter, 50 parts by weight of powdery silica (average particle size: 3.8 μm and specific gravity: 2.70), 30 parts by weight of zinc oxide, 80 parts by weight of rutile powder, 10 parts by weight of a polyethylene oxide paste (20%), 50 parts by weight of toluol and 118 parts by weight of xylol were charged into a vessel together with glass beads and shaken by means of a paint shaker. The resultant pigment slurry was loaded with 680 parts by weight of the above dispersion of powdery zinc coated in advance, thereby obtaining paste C.

This paste C was used in Example 11.

(d) Proportioning for coating material

The above base agent was mixed with each of the above pastes in a weight ratio of 40 : 60. Isopropyl alcohol was added to render the pigment volume concentration suitable for obtaining the desired thickness.

Comparative Example 7

A shot blasted steel plate (70 mm x 150 mm x 3.2 mm) was electrostatically coated with a powder coating material (trade name: Everclad 3120, produced by Kansai Paint Co., Ltd.) without the application of a primary rust-preventive coating material. The coated steel plate was heated to 200°C in 60 sec by means of a high frequency induction heater and held at 200°C for 3 min to thereby form a coating film of 150 μm in thickness. Thus, four test pieces were obtained.

The thus obtained test pieces were subjected to the following evaluation and tests.

(1) Appearance of coating film

The aspects of bubbling, crater, pinhole and the like were observed by visual inspection with or without the use of a magnifying glass, and the appearance of the coating film of powder coating material was evaluated in the following four grades.

⟨Evaluation⟩

4: no abnormality,
3: no pinhole while a few bubbling traces (uneveness) observed,
2: many bubbling traces (uneveness) observed and also a few pinholes observed, and
1: uneveness being conspicuous and many pinholes observed.

The results are given in Table 4.

(2) Adhesive property of coating film

The adhesive property of the coating film was evaluated by the following two methods.

(a) Cross-cut adhesive test

Eleven 2 mm-spaced cut lines were made on the coating film formed on a surface of a steel plate to a depth reaching the base of the steel plate by means of a cutter knife and also eleven 2 mm-spaced cut lines were made in the same manner in a direction perpendicular to the above cut lines to thereby form 100 squares. A pressure-sensitive adhesive tape was pressed onto the 100 squares and rapidly peeled. An unpeeled coating film ratio was measured, which was employed as the index of adhesion of coating film.

(b) Tensile test

A cylindrical dolly (adhesion area = 2 $cm^2$) was bonded to the surface of coating film of a test piece at the center thereof with the use of an epoxy resin adhesive. The test piece was secured to a test piece fixing part of a hydraulic tensile tester with the use of a jig and the dolly bonded to the coating film of the test piece was vertically drawn. The force ($kgf/cm^2$) required for peeling and the ratio of peeled part (T: cohesive failure in the interior of the coating film of primary rust-preventive coating material, T/P: interlayer between the coating film of primary rust-preventive coating material and the coating film of powder coating material, P: cohesive failure in the interior of the coating film of powder coating material and A: cohesive failure of the adhesive) were measured, which were employed as the index of adhesion of coating film.

The results are given in Table 4.

(3) Salt spray test

A cross cut was made on a test piece in a lower half thereof to a depth reaching the base of the steel plate by means of a cutter knife and the resultant test piece was subjected to the salt spray test according to Japanese Industrial Standard K-5400 for 1000 hr. The appearance of the coating film after the 1000 hr test (blister and point rust) was observed and the width (mm) having suffered from a drop of the adhesive property of the coating film was measured from the cut lines of the cross cut.

The results are given in Table 4.

(4) Cathodic peeling resistance

The center of a test piece was drilled so as to remove the coating film in the form of a circle of 6 mm in diameter where the base of the steel plate was exposed. Thereafter, the test piece was immersed in a 3% aqueous sodium chloride solution and a voltage of -1.5 V was applied. 500 hr later, the test piece was lifted and the coating film was peeled outwardly from the circle in the region where the adhesive property was dropped by means of a cutter knife. The diameter (mm) of the peeled part was measured.

The results are given in Table 4.

Comparative Example 8

In Comparative Example 8, the primary rust-preventive coating material containing the paste A was applied to the surface of the steel plate according to the conventional coating method so that the coating film having an average thickness of 15 $\mu$m was formed.

Thereafter, the coating film of powder coating material was formed on the thus obtained coating film of primary rust-preventive coating material in the same manner as in Comparative Example 7 to thereby prepare a test piece. The obtained test piece was evaluated and tested in the same manner as in Comparative Example 7.

The results are given in Table 4.

The above conventional coating method will be illustrated below. Reciprocating coating was performed with the primary rust-preventive coating material by means of two spray tips (tip No. 163-821 manufactured by Graco K.K.), arranged so that the respective coating patterns overlapped each other in a width of 10 cm and the respective coating pattern widths were each 45 cm, being caused to have reciprocating motion at a speed of 68 m/min in a direction perpendicular to a direction of move of the steel plate, which is 4.5 m in width and 6 m in length in the direction of its length, at a speed of 6 m/min. At the time of this coating, also, one cold rolled soft steel sheet of 1 m in length, 3 cm in width and 0.8 mm in thickness for measurement of the coating film thickness, one shot blasted steel plate of 100 mm x 300 mm x 3.2 mm for the rust-prevention property test and four shot blasted steel plates each of 70 mm x 150 mm x 3.2 mm for the test of performance after overcoating with the powder coating material were placed in the center of the large-size steel sheet and coated.

With respect to the above coating film of primary rust-preventive coating material formed on the cold rolled soft steel sheet for the measurement of the coating film thickness, the film thicknesses were measured at 20 points or more with the use of electromagnetic thickness gauge (model LE-210) manufactured by KETT. Thus, it was found that the average thickness of the coating film in the dry state, the standard deviation and the index of dispersion of coating film thicknesses were 15.6 μm, 3.4 and 0.22, respectively.

Moreover, the following rust-prevention property test was carried out of the above test piece of the shot blasted steel plate for the rust-prevention property test which had the coating film of primary rust-preventive coating material formed on its surface but had not yet been coated with the powder coating material.

[Rust-prevention property test]

A shot blasted SS400 steel plate having a size of 100 mm x 300 mm x 3.2 mm was placed on the large-size steel plate (4.5 x 6 m) employed in the coating test and coated, and the coating film formed on the surface of the SS400 steel plate by means of the above coating was cured indoors for one week to thereby obtain a test piece.

The thus obtained test piece was secured at 45° to the south on a weathering table set in the coastal area of Otake City, Hiroshima Prefecture and weathered. The rust-prevention property (weathering rust-prevention property) was evaluated with the weathering period up to the time at which point rust was observed.

The results are given in Table 4.

Comparative Example 9

The surface of the steel plate was coated with the primary rust-preventive coating material containing the paste A in the same manner as in Comparative Example 8, thereby obtaining a steel plate provided with the coating film of primary rust-preventive coating material whose average thickness in the dry state, standard deviation and index of dispersion of thicknesses were 7.2 μm, 1.66 and 0.23, respectively.

The coating film of powder coating material was formed on the thus obtained coating film of primary rust-preventive coating material in the same manner as in Comparative Example 8 to thereby obtain test pieces. The obtained test pieces were evaluated and tested in the same manner as in Comparative Example 8.

The results are given in Table 4.

Example 10

Referring to Fig. 1 (a), the steel plate surface to tip distance and the discharge pressure of the coating material were regulated so that the coating pattern width was 60 cm, and the six spray tips (tip No. 163-817 manufactured by Graco K.K.) were positioned and fixed so that respective halves (= 30 cm) of adjacent coating pattern widths overlapped each other. A steel plate of 1.5 m in width and 3 m in length was passed under the spray patterns discharged by the six spray tips at a speed of 60 m/min to thereby coat the surface of the steel plate with the primary rust-preventive coating material containing the paste A.

The thus obtained coating film of primary rust-preventive coating material was a uniform thin film whose average thickness in the dry state, standard deviation and index of dispersion of thicknesses were 7.1 μm, 1.14 and 0.16, respectively.

The coating film of powder coating material was formed on the thus obtained coating film of primary rust-preventive coating material in the same manner as in Comparative Example 8 to thereby obtain test pieces. The obtained test pieces were evaluated and tested in the same manner as in Comparative Example 8.

The results are given in Table 4.

Example 11

The surface of the steel plate was coated with the primary rust-preventive coating material in the same manner as in Example 10 except that the primary rust-preventive coating material containing the paste C was used in place of the primary rust-preventive coating material containing the paste A and that FF tips (manufactured by Graco K.K., tip No. 163-816) were used as spray tips.

The thus obtained coating film of primary rust-preventive coating material was a uniform thin film whose average thickness in the dry state, standard deviation and index of dispersion of thicknesses were 5.3 µm, 0.58 and 0.11, respectively.

The coating film of powder coating material was formed on the thus obtained coating film of primary rust-preventive coating material in the same manner as in Comparative Example 8 to thereby obtain test pieces. The obtained test pieces were evaluated and tested in the same manner as in Comparative Example 8.

The results are given in Table 4.

Table 4

|  | Comp. Ex. 7 | Comp. Ex. 8 | Comp. Ex. 9 | Ex. 10 | Ex. 11 |
|---|---|---|---|---|---|
| Coating with primary rust-preventive coating material | none | made | made | made | made |
| 1) type of paste | -- | A | A | A | C |
| 2) av. dry film thickness [µm] | -- | 15.6 | 7.2 | 7.1 | 5.3 |
| 3) standard deviation | -- | 3.4 | 1.66 | 1.14 | 0.64 |
| 4) index of film thickness dispersion | -- | 0.22 | 0.23 | 0.16 | 0.12 |
| 5) weathering anticorrosion property (month) | -- | 5 | 1.5 | 3 | 3 |
| Properties exhibited after powder coating |  |  |  |  |  |
| 1) appearance of coating film | 4 | 1 | 2 | 3 | 4 |
| 2) adhesion of coating film |  |  |  |  |  |
| ratio of unpeeled coating film squares [%] | 100 | 0 | 70 | 90 | 100 |
| adhesive strength [kgf/cm$^2$] | >100 | 10> | 40 | 75 | >100 |
| ratio of peeled parts | A: 100% | T: 100% | T: 100% | A: 50% T: 50% | A: 100% |
| 3) salt spray test (1000 hr) |  |  |  |  |  |
| width of lowered adherence of film measured from cross cut line [mm] blister, point rust | 8 * | ∞ many pt. rusts | 4 a few pt.rusts | 2 * | 1> * |
| 4) Cathodic peeling resistance complete peeling diam. [mm] | 18 | ∞ | 12 | 8 | 6 |
| (Note) In the ratio of peeled parts, A represents cohesive failure of the adhesive and T cohesive failure in the interior of the coating film of primary rust-preventive coating material. | | | | | |

* : no abnormality

It is seen from Table 4:

that the results of the salt spray test and cathodic peeling resistance test of Comparative Example 7 demonstrate that the width of lowered adherence measured from the flaw of the coating film is large when the coating film of powder coating material is directly formed on the surface of the steel plate;

that, in Comparative Example 8, the thickness of the coating film of primary rust-preventive coating material is so large that the rust-preventive effect which is the effect to be attained in the present invention is conspicuously deteriorated by bubbling or cohesive failure;

that, in Comparative Example 9 in which the coating film of primary rust-preventive coating material has been thinned, the bubbling and the adhesive property of the coating film are markedly improved as compared with those of Comparative Example 8 but their effects cannot be stated as being satisfactory, and, further, the practical weathering period of 3 months has not been attained in the rust-prevention property of the coating film of primary rust-preventive coating material;

that, in Example 10, not only is the dispersion of thickness of the coating film of primary rust-preventive coating material so small that the practical weathering period of 3 months has been attained to thereby demonstrate excellent rust-prevention property but also the cohesive failure ratio T has been reduced to 50% and the adhesive strength is 75 kgf/cm$^2$ showing a practically satisfactory strength to thereby demonstrate marked improvement of the performance after formation of the coating film of powder coating material and conspicuously reduce the width of lowered adherence measured from the flaw of the coating film which has been the drawback of Comparative Example 7; and

that, in Example 11, the performance is superior to that of Example 10, so that the coating of Example 11 can be stated as being an extremely excellent heavy duty anticorrosive coating.

## Claims

1. A steel plate for large-size structures having, formed at its surface, a coating film of a primary rust-preventive coating material comprising a silicate binder and powdery zinc as a rust-preventive pigment,

   wherein the coating film has an average thickness of 3 to 10 μm in its dry state, and
   wherein the coating film exhibits an index of dispersion of coating film thicknesses (= standard deviation/average of dry coating film thicknesses) which is not greater than 0.18.

2. A method of applying a primary rust-preventive coating material to a steel plate for large-size structures, which comprises:

   spray coating with a primary rust-preventive coating material a surface of the steel plate unidirectionally traveling at a constant speed, by means of a coating line having a plurality of fixed spray tips disposed with a spacing between adjacent spray tips in the direction of travel of the steel plate to be coated, said spray tips being arranged in positions such that their respective spray patterns at the moment of spraying never overlap each other, and said adjacent spray tips being disposed in a predetermined distance in a direction perpendicular to the direction of travel of the steel plate and said distance being equal to 1/n of spray pattern width (n is an integer of 2 to 5), to thereby form a uniform thin coating film having an average thickness of 3 to 10 μm in its dry state and exhibiting an index of dispersion of coating film thicknesses (= standard deviation/average of dry coating film thicknesses) which is not greater than 0.18,
   wherein said primary rust-preventive coating material comprises a silicate binder and powdery zinc as a rust-preventive pigment at a pigment volume content of 5 to 15%, said pigment in its entirety having an average particle size which is smaller than the average of dry coating film thicknesses.

3. The method of applying a primary rust-preventive coating material to a steel plate for large-size structures as claimed in claim 2, wherein the spray tips are FF tips having a double tip structure capable of promoting atomization of the coating material.

4. A method of applying a primary rust-preventive coating material to a steel plate for large-size structures which comprises:

   coating with the primary rust-preventive coating material the steel plate by means of a coating line provided with a plurality of fixed spray tips to thereby form a uniform thin coating film having an average thickness of 3 to 10 μm in its dry state and exhibiting an index of dispersion of coating film thicknesses (= standard deviation/average of dry coating film thicknesses) which is not greater than 0.18, said fixed spray tips being arranged in positions such that their respective spray patterns never overlap each other at the moment of spraying and arranged so that every coating-overlap width by the adjacent spray tips is identical and equal to (n - 1)/n of a width of coating made by a single spray tip (n is an integer of 2 to 5),

wherein said primary rust-preventive coating material comprises a silicate binder and powdery zinc as a rust-preventive pigment at a pigment volume content of 5 to 15%, said pigment in its entirety having an average particle size which is smaller than the average of dry coating film thicknesses.

5. The method of applying a primary rust-preventive coating material to a steel plate for large-size structures as claimed in claim 4, wherein the spray tips are FF tips having a double tip structure capable of promoting atomization of the coating material.

6. A method of applying a primary rust-preventive coating material to a steel plate for large-size structures, which is a unidirectional coating comprising:

spray coating with a primary rust-preventive coating material a surface of the steel plate unidirectionally traveling at a constant speed by means of a coating line having a plurality of spray tips which are disposed with a spacing between adjacent spray tips in a direction perpendicular to the direction of travel of the steel plate to be coated and which move in a single direction crossing the direction of travel of the steel plate synchronously with a traveling speed of the steel plate, said spray tips being arranged in positions such that their respective spray patterns at the moment of spraying never overlap each other, and said adjacent spray tips being disposed in a predetermined distance in the direction of travel of the steel plate and said distance being which is equal to 1/n of spray pattern width (n is an integer of 2 to 5),
then causing the plurality of spray tips to move in a direction opposite to said single direction without spray coating synchronously with the traveling speed of the steel plate, and
repeating said spray coating and said move of the spray tips in the opposite direction to form a uniform thin coating film having an average thickness of 3 to 10 $\mu$m in its dry state and exhibiting an index of dispersion of coating film thicknesses (= standard deviation/average of dry coating film thicknesses) which is not greater than 0.18,
wherein said primary rust-preventive coating material comprises a silicate binder and powdery zinc as a rust-preventive pigment at a pigment volume content of 5 to 15%, said pigment in its entirety having an average particle size which is smaller than the average of dry coating film thicknesses.

7. The method of applying a primary rust-preventive coating material to a steel plate for large-size structures as claimed in claim 6, wherein the spray tips are FF tips having a double tip structure capable of promoting atomization of the coating material.

8. A method of applying a primary rust-preventive coating material to a steel plate for large-size structures, which is reciprocating coating comprising:

spray coating with a primary rust-preventive coating material a surface of the steel plate unidirectionally traveling at a constant speed by means of a coating line having a plurality of spray tips which are disposed with a spacing between adjacent spray tips in a direction perpendicular to the direction of travel of the steel plate to be coated and which move in a single direction perpendicular to the direction of travel of the steel plate synchronously with a traveling speed of the steel plate, said spray tips being arranged in positions such that their respective spray patterns at the moment of spraying never overlap each other, said adjacent spray tips being disposed in a predetermined distance in the direction of travel of the steel plate and said distance being equal to 1/n of spray pattern width (n is an integer of 2 or 3),
then spray coating with the primary rust-preventive coating material the surface of the steel plate by means of the plurality of spray tips being caused to move in a direction opposite to said single direction synchronously with the traveling speed of the steel plate, and
repeating said spray coatings to form a uniform thin coating film having an average thickness of 3 to 10 $\mu$m in its dry state and exhibiting an index of dispersion of coating film thicknesses (= standard deviation/average of dry coating film thicknesses) which is not greater than 0.18,
wherein said primary rust-preventive coating material comprising a silicate binder and powdery zinc as a rust-preventive pigment at a pigment volume content of 5 to 15%, said pigment in its entirety having an average particle size which is smaller than the average of dry coating film thicknesses.

9. The method of applying a primary rust-preventive coating material to a steel plate for large-size structures as claimed in claim 8, wherein the spray tips are FF tips having a double tip structure capable of promoting atomization of the coating material.

10. A coated steel plate for large-size structures comprising a uniform thin coating film of a primary rust-preventive coating material and a coating film of a powder coating material formed on a surface thereof in this order,

said primary rust-preventive coating material comprising a silicate binder and powdery zinc as a rust-preventive pigment,

said uniform thin coating film having an average thickness of 3 to 10 $\mu$m in its dry state and exhibiting an index of dispersion of coating film thicknesses (= standard deviation/average of dry coating film thicknesses) which is not greater than 0.18.

11. The coated steel plate for large-size structures as claimed in claim 10, wherein the uniform thin coating film is one formed by uniformly recoating a surface of a steel plate for large-size structures with a primary rust-preventive coating material at least twice in total by means of a plurality of spray tips,

said primary rust-preventive coating material comprising a silicate binder and powdery zinc as a rust-preventive pigment at a pigment volume content of 5 to 15%, said pigment in its entirety having an average particle size smaller than an average of dry coating film thicknesses.

# Fig. 1

(a)

(b)

# Fig.2

(a)

3

(b)

4

# Fig.3

(a)

3

5

2

(b)

4

5

2

# Fig.4

2b

2a

6   6

Fig. 5

## F i g. 6

# F i g. 7

## *Fig. 8*

once
coated
part

twice
coated
part

thrice
coated
part

## *Fig. 9*

(a)

2

(b)

2

(c)

2

2

(d)

| once coated part | twice coated part | thrice coated part | four-times coated part |

# Fig. 10

(a)

2

(b)

2

(c)

2

| once coated part | twice coated part | thrice coated part | four-times coated part |

## INTERNATIONAL SEARCH REPORT

| | International application No. |
|---|---|
| | PCT/JP95/02082 |

| A. CLASSIFICATION OF SUBJECT MATTER |
|---|
| Int. Cl$^6$   B32B15/08, B05D7/14 |

According to International Patent Classification (IPC) or to both national classification and IPC

| B. FIELDS SEARCHED |
|---|
| Minimum documentation searched (classification system followed by classification symbols) |
| Int. Cl$^6$   B32B15/08, B05D7/14 |

| Documentation searched other than minimum documentation to the extent that such documents are included in the fields searched |
|---|
| Jitsuyo Shinan Koho                     1926 - 1995 |
| Kokai Jitsuyo Shinan Koho               1971 - 1995 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X | JP. 63-149386, A (Sumitomo Metal Industries, Ltd.), June 22, 1988 (22. 06. 88)(Family: none) | 1 |
| Y | JP, 3-26380, A (Nippon Steel Corp.), February 4, 1991 (04. 02. 91)(Family: none) | 2 - 11 |
| Y | JP, 3-57839, B2 (Kawasaki Steel Corp.), September 3, 1991 (03. 09. 91)(Family: none) | 2 - 11 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| November 20, 1995 (20. 11. 95) | December 12, 1995 (12. 12. 95) |

| Name and mailing address of the ISA/ | Authorized officer |
|---|---|
| Japanese Patent Office | |
| Facsimile No. | Telephone No. |

Form PCT/ISA/210 (second sheet) (July 1992)